# EUROPÄISCHE PATENTSCHRIFT

(11) **EP 2 037 154 B1**
(45) Veröffentlichungstag und Bekanntmachung des Hinweises auf die Patenterteilung: **16.11.2011**
(21) Anmeldenummer: 08163725.8
(22) Anmeldetag: 05.09.2008
(51) Int. Cl.: F16H 57/02

(54) **Belüftungsvorrichtung für ein Gehäuse**
Ventilation device for a casing
Dispositif d'aération pour un boîtier

(30) Priorität: 13.09.2007 DE 102007043588
(43) Veröffentlichungstag der Anmeldung: 18.03.2009
(73) Patentinhaber: ZF Friedrichshafen AG, 88046 Friedrichshafen (DE)
(72) Erfinder: Platzer, Michael, 34302, Ellenberg (DE); Schappert, Hartmut, 34128, Kassel (DE)

(56) Entgegenhaltungen:
- EP-A2- 0 939 250
- DE-U- 1 918 942
- DE-U1- 20 021 586
- FR-A- 1 333 338
- FR-A1- 2 685 758
- JP-A- 2002 106 687
- US-A- 2 329 078
- US-A- 2 520 887
- US-B1- 6 447 565
- US-B1- 6 745 565

## Beschreibung

Die vorliegende Erfindung betrifft eine Belüftungsvorrichtung für ein Gehäuse gemäß dem Oberbegriff des Patentanspruchs 1.

Eine gattungsgemäße Vorrichtung ist aus DE 1 918 942 U bekannt.

Für Gehäuse von Maschinen, insbesondere Getrieben oder Motoren, in welchen sich betriebsbedingt die Temperatur und damit der Druck der sich im Gehäuseinneren befindlichen Luft ändert, ist zur Vermeidung eines daraus resultierenden Über- oder Unterdrucks eine Belüftungsvorrichtung erforderlich. Diese erlaubt den Austausch von Luft, wodurch Druckwirkungen mit ihren schädlichen Auswirkungen auf die Dichtigkeit des Gehäuses vermieden werden. Darüber hinaus soll gegebenenfalls, je nach Art der Umgebung, das Eintreten von Flüssigkeiten in das Gehäuse von der Belüftungsvorrichtung verhindert werden.

Die Reinigung des Gehäuses stellt ganz besondere Anforderungen an die Belüftungseinrichtung, da die Säuberung verschmutzter Geräte oder Maschinen, insbesondere Getriebe oder Motoren, mit Heißdampf-Strahlgeräten eine weite Verbreitung gefunden hat. Das Waschmedium besteht hierbei in der Regel aus Wasser mit einem chemischen Reinigungszusatz. Die Reinigungswirkung wird sowohl durch die Wärme des Waschmediums als auch durch den unter hohem Druck austretenden Dampf- bzw. Waschmediumstrahl erreicht, wobei der Waschmediumstrahl ein Gemisch aus Luft, Wasserdampf und dem flüssigen Waschmedium ist.

Kritisch für die Belüftungseinrichtung ist bei dieser Reinigungstechnik der lokal hohe Staudruck, der beim Auftreffen des Waschmediumstrahls auf der Bauteiloberfläche entsteht und das Waschmedium auch in kleinste Spalte und Öffnungen eindringen lässt. Hierdurch entsteht das Problem, dass bei einer Hochdruckreinigung das Waschmedium durch die Belüftungsvorrichtung in das Gehäuse eintreten und sich mit dem im Gehäuse befindlichen Betriebsmedium vermischen kann. Gerade im Falle von Luftfahrtgetrieben ist dies sicherheitskritisch, da die Verunreinigung des Getriebeöls mit Wasser die Schmiereigenschaften erheblich verschlechtert und das Wasser zudem im Getriebe korrosiv wirksam ist. Bekannte Belüftungsvorrichtungen beruhen auf dem Prinzip der Labyrinth-Dichtung, welche das Eindringen von Waschmedium bei der Hochdruckreinigung nicht wirkungsvoll verhindert.

Die der Erfindung zugrunde liegende Aufgabe ist die Schaffung einer Belüftungseinrichtung für Gehäuse, welches das Eindringen des Waschmediums in das Gehäuseinnere verhindert, ohne hierdurch die Belüftungsfähigkeit zu beeinträchtigen.

Diese Aufgabe wird durch die Merkmale des Patenanspruchs 1 gelöst.

Eine Belüftungsvorrichtung für ein Gehäuse besteht aus einem ersten Kanal, der einen Gehäuseinnenraum mit der Umgebung verbindet. Eine Einrichtung verhindert das Eindringen von Waschmedium bei der Hochdruckreinigung in diese erste Bohrung. Hierzu ist ein zweiter Kanal vorgesehen, welcher an mindestens zwei Enden zur Umgebung geöffnet und so vom Waschmedium durchströmbar ist, falls dieses in dem Kanal auftrifft. Der erste Kanal, der quer zu dem zweiten Kanal verläuft, mündet im Bereich einer Engstelle des zweiten Kanals in diesen. Tritt nun das Waschmedium in den Kanal ein und durchströmt diesen, so sinkt in der Engstelle gemäß dem Gesetz von Bernoulli durch die dort höhere Strömungsgeschwindigkeit des Waschmediums der statische Druck ab, wodurch aus dem ersten Kanal Luft aus dem Gehäuseinnenraum angesaugt und so einem Eindringen von Waschmedium in flüssiger oder gas-/dampfförmiger Form entgegengewirkt wird.

Vorteilhafte Ausgestaltungen der Erfindung ergeben sich aus den Unteransprüchen.

Erfindungsgemäß mündet der erste Kanal in der Einbaulage von oben dem Bereich der Engstelle des zweiten Kanals. Hierdurch wird verhindert, dass durch Wirkung der Schwerkraft das Waschmedium, welches durch den zweiten Kanal fließt, in den ersten Kanal eintreten kann. Das Gehäuse befindet sich während der Reinigung immer in der Einbaulage, auch wenn es ausgebaut ist.

Eine sehr vorteilhafte Variante zeigt, dass der erste Kanal zwischen der Mündung in den Gehäuseinnenraum und der Mündung im Bereich der Engstelle des zweiten Kanals einen nach oben gekrümmten Verlauf aufweist. Hierdurch ist es nicht möglich, dass das Waschmedium infolge der Schwerkraft durch den ersten Kanal in den Gehäuseinnenraum fließen kann.

In Weiterbildung des erfindungsgemäßen Gegenstands besteht der erste Kanal aus mindestens einem Belüftungskanal, der in den Gehäuseinnenraum mündet, einem Sammelraum der sich an der obersten Stelle des ersten Kanals befindet und in welchen mindestens ein Belüftungskanal mündet, und in einen Verbindungskanal, der von der Engstelle des zweiten Kanals zum Sammelraum führt. Die Belüftungskanäle und der Verbindungskanal können auch als Bohrungen ausgeführt sein, ebenso der Sammelraum.

In diesem Zusammenhang sieht eine weitere Ausgestaltungsform vor, dass die Verengung in dem zweiten Kanal durch eine quer zum zweiten Kanal angeordnete Zylinderbuchse gebildet wird, wobei diese in den zweiten Kanal hineinragt und die Durchgangsbohrung in der Zylinderbuchse als Verbindungskanal wirksam ist.

Weiter erfindungsgemäß ist der zweite Kanal als durchgehende Bohrung ausgeführt und weist somit genau zwei Öffnungen zur Umgebung sowie einen geraden Verlauf auf. Durch diese strömungsgünstige Gestaltung wird die Fliessgeschwindigkeit des eintretenden Waschmediums nicht beeinträchtigt und eine hohe statischer Druckabsenkung in der Engstelle bewirkt.

In einer sehr gut anwendbaren Ausgestaltung der Erfindung ist die Belüftungsvorrichtung als ein separater Belüftungseinsatz ausgebildet und nicht Bestandteil des Gehäuses. Der Belüftungseinsatz ist an dem Gehäuse befestigbar, beispielsweise durch eine Verschraubung, eine Steckverbindung, einen Bajonettverschluss, eine Presspassung oder eine stoffschlüssige Verbindung. In der Einbaulage ist der Belüftungseinsatz in der Regel auf der Gehäuseoberseite, die sowohl gerade als auch abgeschrägte Flächen aufweisen kann, angeordnet. Eine Reinigung findet in der Einbaulage des Gehäuses statt.

Es hat sich als besonders vorteilhaft für die Saugwirkung beim Durchströmen des zweiten Kanals gezeigt, wenn die Zylinderbuchse bis zur Bohrungsmitte des zweiten Kanals in diesen hineinragt.

Eine weitere Variante sieht vor, dass der Belüftungseinsatz einen Filter aufweist, der den Gehäuseinnenraum vor Verschmutzung aus der Umgebung und die Umgebung vor Austritt eines Betriebsmediums, insbesondere seiner dampf- oder gasförmigen Anteile, schützt.

In einer besonderen Ausführung ist der Belüftungseinsatz zweiteilig aus einem Oberteil und einem Unterteil aufgebaut. Hierbei übernimmt das Unterteil die Funktion der Befestigung im Gehäuse und das Oberteil die Aufnahme der Einrichtung gegen das Eindringen von Waschmedium. Darüber hinaus kann das Oberteil verdrehbar auf dem Unterteil angebracht sein, so dass bei einer schrägen Einbaulage des Belüftungseinsatzes der zweite Kanal immer ein Gefälle aufweist, um das Abfließen sich ansammelnder Flüssigkeit zu ermöglichen.

In einer weiterführenden Variante ist zwischen dem Ober- und dem Unterteil eine Dichtung angeordnet.

Schließlich wird es als vorteilhaft beurteilt, an dem freien Ende der Zylinderbuchse, welche in die zweite Bohrung ragt, auf dem Außendurchmesser eine Abreißkante auszubilden, um die Strömungsverhältnisse in dem an der Mündung der Zylinderbuchse vorbeiströmenden Waschmedium zu optimieren.

Eine Anwendung der Erfindung bietet sich ganz besonders als Belüftungsvorrichtung für Hubschraubergetriebe an, da ein Eindringen von Waschmedium und deren Vermischung mit dem Schmierstoff dessen Schmiereigenschaften verschlechtert und zu erhöhtem Verschleiß führt bzw. die Fressneigung in dem tribologischen System führt. Darüber hinaus ist das im Wesentlichen aus Wasser bestehende Waschmedium korrosiv wirksam. Beide Wirkungen verringern die Lebensdauer und sind insbesondere im Luftfahrtbereich sicherheitskritisch.

Ebenso ist eine Verwendung der Belüftungsvorrichtung für ein Motorengehäuse, ein Getriebegehäuse oder ein sonstiges Maschinengehäuse möglich.

Die Erfindung wird im folgenden anhand des in der Zeichnung dargestellten Ausführungsbeispiels näher erläutert.
Es zeigen:
- Fig. 1: eine Schnittzeichnung des Belüftungsvorrichtung in einem Gehäuseausschnitt mit dem zweiten Kanal im Längsschnitt und
- Fig. 2: eine Schnittzeichnung der Belüftungsvorrichtung mit dem zweiten Kanal im Querschnitt.

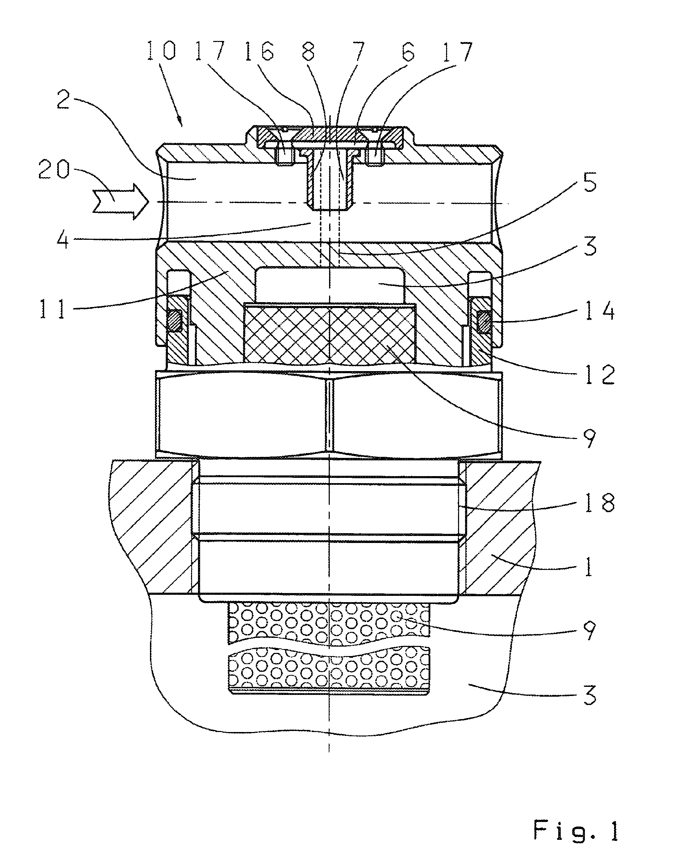

In Fig. 1 ist in einer Schnittzeichnung eine als Belüftungseinsatz 10 ausgeführte Belüftungseinrichtung mit dem als Durchgangsbohrung ausgeführten zweiten Kanal 2 im Längsschnitt dargestellt. Diese befindet sich im Oberteil 11 des Belüftungseinsatzes. Von oben ragt der Verbindungskanal 7 als Innendurchmesser einer Zylinderbuchse 8 quer zum zweiten Kanal 2 bis knapp über dessen Mittellinie in den zweiten Kanal 2 hinein. Zusammen mit der Wandung des zweiten Kanals 2 bildet die Außenkontur der Zylinderbuchse 8 die Engstelle 4. Der Sammelraum 6, in den sowohl der Verbindungskanal 7 als auch die beiden Belüftungskanäle 5 münden, wird nach unten von einer zylindrischen Einsenkung im Oberteil 11 und nach oben von einem mit den Schrauben 17 auf dem Oberteil 11 befestigten Deckel 16 begrenzt. Der Sammelraum 6 stellt hierbei die höchste Stelle dar und bildet mit dem nach unten in die Engstelle 4 mündenden Verbindungskanal 7 und den beiden nach unten in den Gehäuseinnenraum 3 geöffneten Belüftungskanälen 5 den ersten Kanal, der in seinem Verlauf nach oben gekrümmt ist. Durch den ersten Kanal (5, 6, 7) findet der Druckausgleich bzw. Dampf- und/oder Luftaustausch zwischen dem Gehäuseinnenraum 3 und der Umgebung bzw. der Engstelle 4 des zweiten Kanals 2 statt. Das so ausgeführte Oberteil 11 sitzt auf dem Unterteil 12 und ist mit diesem verdrehbar verbunden und mit der Dichtung 14 abgedichtet. Das Befestigungselement 15 verbindet das Oberteil 11 und das Unterteil 12 miteinander. Das Unterteil 12 ist mittels eines Gewindes 18 in dem Gehäuse 1 befestigt. Um die Umgebung bei dem Dampf- und/oder Luftaustausch vor einem Austritt von dampf- oder gasförmigen Anteilen des Betriebsmediums zu schützen bzw. einen Eintritt von Schmutzpartikeln in den Gehäuseinnenraum zu verhindern, sind zwei Filter 9 im Unterteil 12 angeordnet.

Bei der Durchströmung des zweiten Kanals 2 und damit der Engstelle 4 von dem Waschmedium 20 bei der Hochdruckreinigung sinkt durch die Querschnittsänderung und die damit verbundene lokale Zunahme der Strömungsgeschwindigkeit gemäß dem Gesetz von Bernoulli der statische Druck gegenüber den Drücken in der Umgebung und im Gehäuseinnenraum 3 ab. Zum Ausgleich dieser Druckdifferenz entsteht eine Strömung aus dem Gehäuseinnenraum 3 heraus über den ersten Kanal. Durch diese kurzzeitige Strömung aus der Verbindungsbohrung wird ein Eintritt von Waschmedium in das Gehäuseinnere 3 verhindert. Wie dargestellt, ragt die Zylinderbuchse 8 nur bis knapp über die Mittellinie des zweiten Kanals in diesen hinein. Dies stellt eine optimale Position dar, da bei diesen Verhältnissen dies die die größte statische Druckabsenkung erreicht wird. Tritt kein Waschmedium 20 in den zweiten Kanal 2 ein entsteht zwar keine statische Druckabsenkung, aber es besteht auch keine Notwendigkeit einer solchen. Dampfförmige Phasen des Waschmediums 20, die keine ausreichende Strömung aufbauen können, werden aufgrund der nach oben gekrümmten Kanalführung des ersten Kanals 5, 6, 7 am Eindringen in den Gehäuseinnenraum gehindert.

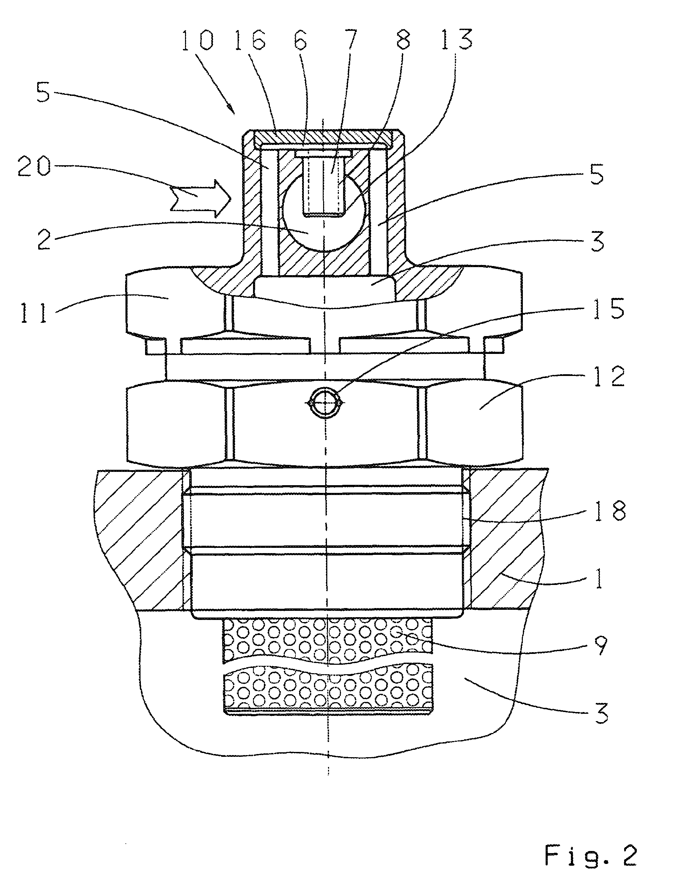

In Fig. 2 ist in einer Schnittzeichnung eine als Belüftungseinsatz 10 ausgeführte Belüftungseinrichtung mit dem als Durchgangsbohrung ausgeführten zweiten Kanal 2 im Querschnitt dargestellt. Der Strahl des Waschmediums 20 trifft hierbei um 90° versetzt wie in Fig. 1 auf das Oberteil 11 hinter dem der zweite Kanal verläuft. Eine Durchströmung der Engstelle 4 findet hierbei nicht statt und somit auch keine statische Druckabsenkung mit dem Effekt der Strömung aus dem Gehäuseinnenraum 3 heraus. Allerdings kann das Waschmedium 20 aus dieser Anströmrichtung aufgrund der Kanalführung des zweiten Kanals 2 auch nicht in den Verbindungskanal eindringen, so dass die beschriebene erfindungsgemäße Belüftungsvorrichtung auch in dieser Position ihre Funktion erfüllt.
Das Befestigungselement 15 verbindet das Oberteil 11 und das Unterteil 12 des Belüftungseinsatzes 10.

### Bezugszeichen

- 1: Gehäuse
- 2: zweiter Kanal
- 3: Gehäuseinnenraum
- 4: Engstelle
- 5: Belüftungskanal
- 6: Sammelraum
- 7: Verbindungskanal
- 8: Zylinderbuchse
- 9: Filter
- 10: Belüftungseinsatz
- 11: Oberteil des Belüftungseinsatzes 10
- 12: Unterteil des Belüftungseinsatzes 10
- 13: Abreißkante
- 14: Dichtung
- 15: Befestigungsstift
- 16: Deckel
- 17: Schraube
- 18: Gewinde
- 20: Waschmedium

## Patentansprüche

1. Belüftungsvorrichtung für ein Gehäuse (1), bestehend aus einem ersten Kanal (5, 6, 7), der einen Gehäuseinnenraum (3) mit der Umgebung verbindet und einer Einrichtung zur Verhinderung des Eindringens eines Waschmediums in den ersten Kanal (5, 6, 7) beim Reinigen des Gehäuses, wobei ein zweiter Kanal (2) vorgesehen ist, welcher an mindestens zwei Enden zur Umgebung geöffnet ist, so dass dieser von dem Waschmedium durchströmbar ist, und der erste Kanal (5, 6, 7) in den quer zum ihm verlaufenden zweiten Kanal (2) im Bereich einer Engstelle (4) des zweiten Kanals (2) mündet, **dadurch gekennzeichnet, dass** der erste Kanal in Einbaulage von oben in die Engstelle (4) mündet, so dass das Eintreten des Waschmediums durch die Wirkung der Schwerkraft in den ersten Kanal verhindert wird, und dass der zweite Kanal (2) als durchgehende Bohrung ausgeführt ist.

2. Belüftungsvorrichtung für ein Gehäuse nach Anspruch 1, **dadurch gekennzeichnet, dass** der erste Kanal zwischen der Mündung in den Gehäuseinnenraum (3) und der Mündung im Bereich der Engstelle (4) eines zweiten Kanals (2) einen nach oben gekrümmten Verlauf aufweist.

3. Belüftungsvorrichtung für ein Gehäuse nach den vorhergehenden Ansprüchen, **dadurch gekennzeichnet, dass** der erste Kanal aus mindestens einem Belüftungskanal (5), einem Sammelraum (6) und einem Verbindungskanal (7) besteht.

4. Belüftungsvorrichtung für ein Gehäuse nach Anspruch 1, **dadurch gekennzeichnet, dass** die Verengung (4) des zweiten Kanals und der Verbindungskanal (7) von einer quer zum zweiten Kanal angeordneten und diesen hineinragenden Zylinderbuchse (8) gebildet sind.

5. Belüftungsvorrichtung für ein Gehäuse nach Anspruch 1, **dadurch gekennzeichnet, dass** die Belüftungsvorrichtung als separater Belüftungseinsatz (10) ausgebildet ist und in das Gehäuse einsetzbar ist.

6. Belüftungsvorrichtung für ein Gehäuse nach Anspruch 1 und 4, **dadurch gekennzeichnet, dass** die Zylinderbuchse in den zweiten Kanals bis über dessen Mittelachse hineinragt.

7. Belüftungsvorrichtung für ein Gehäuse nach Anspruch 1, **dadurch gekennzeichnet, dass** der Belüftungseinsatz (10) einen Filter (9) aufweist, der den Gehäuseinnenraum (3) vor Verschmutzung und die Umgebung vor Austritt eines Betriebsmediums schützt.

8. Belüftungsvorrichtung für ein Gehäuse nach Anspruch 5, **dadurch gekennzeichnet, dass** der Belüftungseinsatz (10) zweiteilig aus einem Oberteil (11) und einem Unterteil (12) aufgebaut ist.

9. Belüftungsvorrichtung für ein Gehäuse nach Anspruch 4, **dadurch gekennzeichnet, dass** an dem in die zweite Bohrung ragendem Ende der Zylinderbuchse auf deren Außendurchmesser zur Optimierung der Strömungsverhältnisse eine Abreißkante (13) ausgebildet ist.

10. Hubschraubergetriebe mit einer Belüftungsvorrichtung nach Anspruch 1.

## Claims

1. Ventilation device for a housing (1), composed of a first duct (5, 6, 7) which connects a housing interior space (3) to the environment, and of an apparatus for preventing the infiltration of a washing medium into the first duct (5, 6, 7) during the cleaning of the housing, a second duct (2) being provided which is open to the environment at at least two ends, such that the washing medium can flow through said second duct, and the first duct (5, 6, 7) opening into the second duct (2), which runs perpendicular thereto, in the region of a constriction (4) of the second duct (2), **characterized in that**, in the installed position, the first duct opens into the constriction (4) from above, such that the inflow of washing medium into the first duct is prevented by the action of gravity, and **in that** the second duct (2) is formed as a continuous bore.

2. Ventilation device for a housing according to Claim 1, **characterized in that** the first duct has an upwardly curved profile between the opening into the housing interior space (3) and the opening in the region of the constriction (4) of a second duct (2).

3. Ventilation device for a housing according to the preceding claims, **characterized in that** the first duct is composed of at least one ventilation duct (5), a collecting chamber (6) and a connecting duct (7).

4. Ventilation device for a housing according to Claim 1, **characterized in that** the constriction (4) of the second duct and the connecting duct (7) are formed by a cylindrical sleeve (8) which is arranged perpendicular to and projects into the second duct.

5. Ventilation device for a housing according to Claim 1, **characterized in that** the ventilation device is formed as a separate ventilation insert (10) and can be inserted into the housing.

6. Ventilation device for a housing according to Claims 1 and 4, **characterized in that** the cylindrical sleeve projects into the second duct and beyond the central axis thereof.

7. Ventilation device for a housing according to Claim 1, **characterized in that** the ventilation insert (10) has a filter (9) which prevents contamination of the housing interior space (3) and which prevents the escape of an operating medium into the environment.

8. Ventilation device for a housing according to Claim 5, **characterized in that** the ventilation insert (10) is formed in two parts from a top part (11) and a bottom part (12).

9. Ventilation device for a housing according to Claim 4, **characterized in that that** end of the cylindrical bush which projects into the second bore has formed on the outer diameter thereof a separation edge (13) for optimizing the flow conditions.

10. Helicopter gearbox having a ventilation device according to Claim 1.

## Revendications

1. Dispositif de ventilation pour un boîtier (1), constitué d'un premier conduit (5, 6, 7) qui raccorde un espace intérieur de boîtier (3) à l'environnement et d'une installation pour la prévention de la pénétration d'un fluide de lavage dans le premier conduit (5, 6, 7) lors du nettoyage du boîtier, un deuxième conduit (2) étant prévu, lequel est ouvert sur l'environnement à aux moins deux extrémités, de telle sorte que ce deuxième conduit puisse être parcouru par le fluide de lavage, et le premier conduit (5, 6, 7) débouchant dans le deuxième conduit (2) qui s'étend transversalement à lui, dans la zone d'une partie étroite (4) du deuxième conduit (2), **caractérisé en ce qu'**en position de montage, le premier conduit débouche par le dessus dans la partie étroite (4), de telle sorte que l'arrivée du fluide de lavage dans le premier conduit sous l'effet de la force de pesanteur soit empêchée, et **en ce que** le deuxième conduit (2) est réalisé sous forme d'alésage traversant.

2. Dispositif de ventilation pour un boîtier selon la revendication 1, **caractérisé en ce que** le premier conduit présente un tracé courbé vers le haut entre l'embouchure dans l'espace intérieur du boîtier (3) et l'embouchure dans la zone de la partie étroite (4) d'un deuxième conduit (2).

3. Dispositif de ventilation pour un boîtier selon les revendications précédentes, **caractérisé en ce que** le premier conduit est constitué d'au moins un conduit de ventilation (5), un espace de collecte (6) et un conduit de raccordement (7).

4. Dispositif de ventilation pour un boîtier selon la revendication 1, **caractérisé en ce que** le rétrécissement (4) du deuxième conduit et le conduit de raccordement (7) sont formés d'une douille cylindrique (8) disposée transversalement au deuxième conduit et pénétrant dans ce dernier.

5. Dispositif de ventilation pour un boîtier selon la revendication 1, **caractérisé en ce que** le dispositif de ventilation est réalisé en tant qu'insert de ventilation (10) séparé et peut être inséré dans le boîtier.

6. Dispositif de ventilation pour un boîtier selon les revendications 1 et 4, **caractérisé en ce que** la douille cylindrique pénètre dans le deuxième conduit jusqu'au-delà de son axe médian.

7. Dispositif de ventilation pour un boîtier selon la revendication 1, **caractérisé en ce que** l'insert de ventilation (10) comporte un filtre (9) qui protège l'espace intérieur du boîtier (3) vis-à-vis de la salissure et l'environnement vis-à-vis d'une sortie d'un fluide de travail.

8. Dispositif de ventilation pour un boîtier selon la revendication 5, **caractérisé en ce que** l'insert de ventilation (10) est conçu en deux parties à partir d'une partie supérieure (11) et d'une partie inférieure (12).

9. Dispositif de ventilation pour un boîtier selon la revendication 4, **caractérisé en ce qu'**au niveau de l'extrémité de la douille cylindrique qui fait saillie dans le deuxième alésage, une arête de décollement (13) est réalisée sur le diamètre extérieur de la douille en vue de l'optimisation des conditions d'écoulement.

10. Transmission d'hélicoptère comprenant un dispositif de ventilation selon la revendication 1.
